# EUROPÄISCHE PATENTSCHRIFT

(11) **EP 1 335 654 B1**
(45) Veröffentlichungstag und Bekanntmachung des Hinweises auf die Patenterteilung: **20.06.2007**
(21) Anmeldenummer: 01990416.8
(22) Anmeldetag: 17.11.2001
(51) Int. Cl.: A45D 40/04

(54) **VERFAHREN ZUR HERSTELLUNG EINER ABGABEEINRICHTUNG FÜR STREICHFÄHIGE PRODUKTE**
METHOD FOR PRODUCING A DISPENSING DEVICE FOR PRODUCTS THAT CAN BE SPREAD EASILY
PROCEDE DE FABRICATION D'UN DISPOSITIF DISTRIBUTEUR POUR PRODUITS A ETENDRE

(30) Priorität: 25.11.2000 DE 10058673
(43) Veröffentlichungstag der Anmeldung: 20.08.2003
(73) Patentinhaber: Henkel Kommanditgesellschaft auf Aktien, 40589 Düsseldorf (DE)
(72) Erfinder: HEMMING, Christian, 46119 Oberhausen (DE); HOEVE, Werner, NL-5346 KB Oss (NL); PETERS, Bernd, Willi, 42657 Solingen (DE)
(86) Internationale Anmeldenummer: PCT/EP2001/013308
(87) Internationale Veröffentlichungsnummer: WO 2002/041730

(56) Entgegenhaltungen:
- EP-A- 0 940 103
- FR-A- 2 673 517
- US-A- 5 581 980
- PYE R: "ASSEMBLING PARTS IN THE MOLD" MODERN PLASTICS, MCGRAW-HILL,INC. LAUSANNE, CH, Bd. 47, Nr. 7, 1. Juli 1970 (1970-07-01), Seiten 90-92,94, XP002052171

## Beschreibung

Die Erfindung betrifft ein Verfahren zur Herstellung einer Abgabeeinrichtung für streichfähige Produkte, wie Klebstoff, bei welchem ein hülsenförmiges Element, ein Sockel mit einer Spindel, ein Kolben zur Aufnahme des Produktes und eine Verschlusskappe durch Spritzgießen hergestellt werden und die so hergestellten Teile anschließend montiert werden.

Abgabeeinrichtungen dieser Art, insbesondere für Klebstoff, d.h. so genannte Klebestifte, sind im Markt zahlreich vertreten. Sie bestehen in der Regel wenigstens aus einem hülsenförmigen Element, einem Sockel mit Spindel, einem Kolben zur Aufnahme des Klebstoffes und einer Verschlusskappe. Diese vorgenannten einzelnen Bauteile werden jeweils aus einem geeigneten Kunststoffmaterial durch Spritzgießen hergestellt und anschließend zusammengesetzt bzw. montiert. Der Herstellaufwand für derartige Abgabeeinrichtungen ist offensichtlich beträchtlich, da zur Herstellung der vier vorgenannten Bauteile insgesamt vier verschiedene Spritzgießformen und dementsprechend jeweils vier Spritzgießvorgänge erforderlich sind. Ferner ist auch die Montage relativ aufwendig, da sämtliche vier Bauteile aneinander befestigt werden müssen. Da sowohl die Spritzguss- als auch die Montagekosten den Hauptanteil der Gesamtkosten für derartige Abgabeeinrichtungen darstellen, ist diese Art der Herstellung verbesserungswürdig.

Aus der EP-A-0 940 103 ist eine Abgabeeinrichtung für streichfähige, kosmetische Produkte bekannt, die ein hülsenförmiges Gehäuse, einen Sockel mit einer Mutter, eine zugehörige Spindel mit einem Kolben zur Aufnahme des Produktes und eine Verschlusskappe umfasst. Die einzelnen Bauteile werden durch Spritzgießen hergestellt und die so hergestellten Bauteile werden anschließend montiert. Hierbei wird der Kolben an die Spindel in einem gemeinsamen Spritzvorgang angespritzt und bleibt in der montierten Betätigungsstellung der Abgabeeinrichtung starr mit der Spindel verbunden. Die Spindel ist ihrerseits mit der lang gestreckten Mutter drehbar verbunden, die wiederum axial ortsfest in einem hülsenförmigen Gehäuse fixiert ist. Diese Bauform erfordert aufgrund der lang gestreckten Einzelbauteile einen erhöhten Materialaufwand. Zudem sind die Bauteile schlecht zu montieren und bergen aufgrund der lang gestreckten Gestalt die Gefahr von Bauteilbeschädigungen.

Aufgabe der Erfindung ist es, die Herstellung und Montage derartiger Abgabeeinrichtungen für streichfähige Produkte zu vereinfachen.

Diese Aufgabe wird mit einem Verfahren der eingangs bezeichneten Art erfindungsgemäß dadurch gelöst, dass der Kolben abtrennbar an die Spindel angespritzt wird. Bei dieser Verfahrensführung entfällt gegenüber der bisher üblichen Herstellungsart ein Spritzgießvorgang und damit ein Werkzeug, da der Kolben direkt über Sollbruchstellen an die Spindel angespritzt wird. Die Verbindung zwischen Kolben und Spindel über Sollbruchstellen ist so gewählt, dass sie nach dem Spritzvorgang auf einfache Weise getrennt werden kann. Während der Montage kann entweder der Kolben mit angespritzter Spindel und Sockel in das hülsenförmige Element eingeprellt und anschließend der Kolben durch Zerstörung der Sollbruchstellen auf die Spindel aufgeschraubt werden oder der Kolben kann zunächst durch Zerstörung der Sollbruchstellen auf die Spindel aufgeschraubt und dann die so gebildete Einheit in das hülsenförmige Element eingeprellt werden. Damit läßt sich auch die Montage wesentlich erleichtern.

Der Herstellungsaufwand läßt sich noch weiter dadurch reduzieren, dass die Spindel und der Kolben in einem gemeinsamen Spritzvorgang an das hülsenförmige Element angespritzt werden. Auch hier ist selbstverständlich die Verbindung zwischen den Bauteilen beim gemeinsamen Spritzvorgang so gewählt, dass diese leicht wieder zerstört werden kann. Bei dieser Verfahrensführung entfällt ein weiteres Spritzwerkzeug, wodurch der Aufwand noch weiter verringert werden kann. Auch der Montageaufwand ist entsprechend geringer.

Dabei ist wiederum vorteilhaft vorgesehen, dass die Spindel und der Kolben über Sollbruchstellen an das hülsenförmige Element angespritzt werden.

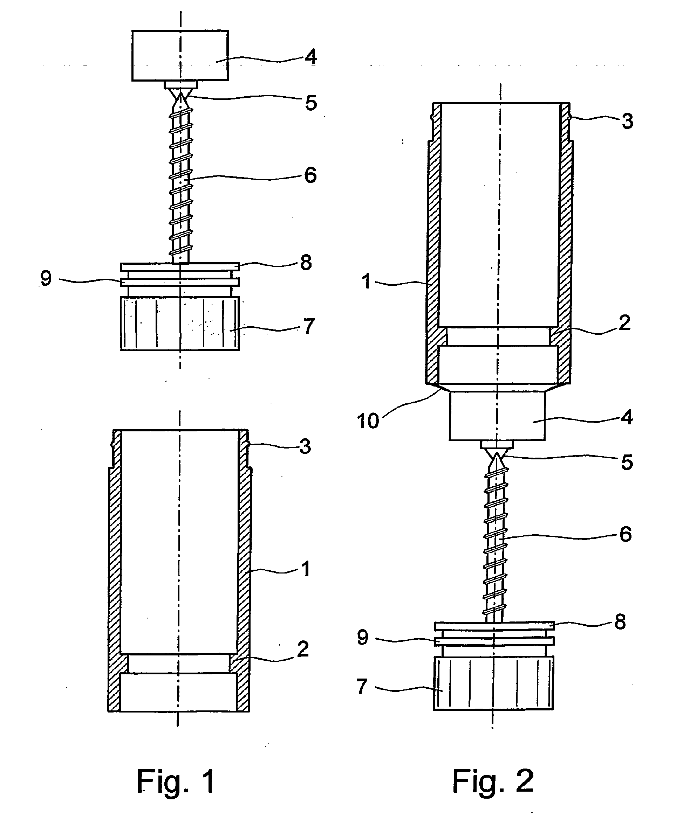

Die Erfindung ist nachstehend anhand der Zeichnung beispielhaft näher erläutert. Diese zeigt in
- Fig. 1: in einer Explosionsdarstellung eine erste Ausgestaltung der Erfindung und in
Fig. 2 ebenfalls in Explosionsdarstellung eine zweite Ausgestaltung der Erfindung. In Fig. 1 ist eine erste Ausgestaltung des erfindungsgemäßen Verfahrens zur Herstellung einer Abgabeeinrichtung für streichfähige Produkte, wie Klebstoff, dargestellt. Bei dieser Ausgestaltung wird in üblicher Weise ein hülsenförmiges Element 1 aus einem geeigneten Kunststoffmaterial durch Spritzgießen hergestellt, dieses hülsenförmige Element 1 weist dabei vorzugsweise eine innere Rastwulst 2 und oberseitig am freien Ende eine umlaufende außenseitige Rastwulst 3 zur Befestigung einer nicht dargestellten Verschlusskappe auf, diese Verschlusskappe wird ebenfalls in einem eigenen Spritzgießvorgang hergestellt.

Erfindungsgemäß ist nun vorgesehen, dass in einem einzigen Spritzgießvorgang ein Kolben 4, der später die streichfähige Masse aufnimmt, über Sollbruchstellen bzw. Haltestege 5 an eine Spindel 6 mit Sockel 7 angespritzt wird. Der Sockel 7 weist darüber hinaus in üblicher Weise eine Rastwulst 8 auf.

Erkennbar sind zur Herstellung der vorgenannten Bauteile nur zwei Spritzgießvorgänge bzw. drei Spritzgießvorgänge notwendig (der dritte für die Herstellung der nicht dargestellten Verschlusskappe). Die Montage erfolgt dann folgendermaßen:

Nach Einlegen einer Dichtung 9 zwischen den Sockel 7 und die Rastwulst 8 wird die aus Kolben 4, Spindel 6 und Sockel 7 bestehende, zunächst einteilige und in einem Spritzvorgang gegossene Baueinheit von unten in das hülsenförmige Element 1 eingeprellt, so dass die Rastwulst 8 an der Rastwulst 2 rastend zur Anlage kommt. Anschließend wird der Kolben 4 gegenüber der Spindel 6 verdreht, wodurch die Haltestege 5 bzw. Sollbruchstellen abbrechen und der Kolben 4 vollständig auf die Spindel 6 aufgeschraubt werden kann. Alternativ ist es auch möglich, zuerst den Kolben 4 gegenüber der Spindel 6 zu verdrehen, wodurch die Haltestege 5 abbrechen. Der Kolben 4 wird dann vollständig in die unterste Montageposition auf die Spindel 6 aufgedreht. Die so erhaltene Montagegruppe wird dann in das hülsenförmige Element 1 eingeprellt.

In die auf eine der beiden Arten zusammen montierte Vorrichtung, kann dann die streichfähige Masse eingegossen werden. Erkennbar wird also nicht nur die Herstellung, sondern zusätzlich auch die Montage der Abgabeeinrichtung durch die erfindungsgemäße Verfahrensführung wesentlich vereinfacht.

Bei der Ausgestaltung nach Fig. 2 ist zur Herstellung der Bauteile Kolben 4, Spindel 6 mit Sockel 7 und hülsenförmiges Element 1 nur ein einziger Spritzgießvorgang notwendig, denn die Spindel 6 mit Sockel 7 und der Kolben 4 werden in einem gemeinsamen Spritzvorgang an das hülsenförmige Element 3 angespritzt, vorzugsweise über als Sollbruchstellen ausgebildete Haltestege 10. Ein weiterer Spritzgießvorgang ist dann nur noch zur Herstellung der Verschlusskappe erforderlich.

Die Montage erfolgt im Prinzip auf die gleiche Weise wie bei der Ausführungsform nach Fig. 1, lediglich ist es erforderlich, zunächst die Sollbruchstellen 10 zwischen dem Kolben 4 und dem hülsenförmigen Element 1 zu überwinden.

Natürlich ist die Erfindung nicht auf die dargestellten Ausführungsbeispiele beschränkt. Weitere Ausgestaltungen sind im Rahmen der Patentansprüche möglich, ohne den Grundgedanken zu verlassen. So könnte grundsätzlich auch die Verschlusskappe an das hülsenförmige Element 1 über Sollbruchstellen mit angespritzt werden.

## Patentansprüche

1. Verfahren zur Herstellung einer Abgabeeinrichtung für streichfähige Produkte, wie Klebstoff, bei welchem ein hülsenförmiges Element (1), ein Sockel (7) mit einer Spindel (6), ein Kolben (4) zur Aufnahme des Produktes und eine Verschlusskappe durch Spritzgießen hergestellt werden und die so hergestellten Teile anschließend montiert werden, wobei der Kolben (4) in einem gemeinsamen Spritzvorgang an die Spindel (6) angespritzt wird, **dadurch gekennzeichnet,**
**dass** der Kolben (4) über Sollbruchstellen (5) abtrennbar an die Spindel (6) angespritzt wird.

2. Verfahren nach Anspruch 1, **dadurch gekennzeichnet,**
**dass** die Spindel (6) und der Kolben (4) in einen gemeinsamen Spritzvorgang an das hülsenförmige Element (1) angespritzt werden.

3. Verfahren nach Anspruch 2, **dadurch gekennzeichnet,**
**dass** die Spindel (6) und der Kolben (4) über Sollbruchstellen (10) an das hülsenförmige Element (1) angespritzt werden.

## Claims

1. A method of making a dispenser for spreadable products, such as adhesive, in which a sleeve-like element (1), a base (7) with a spindle (6), a piston (4) for holding the product and a closure cap are made by injection moulding and the parts thus made are then assembled, the piston (4) being injection moulded onto the spindle (6) in one and the same injection moulding cycle, **characterized in that** the piston (4) is removably injection moulded onto the spindle (6) via predetermined weak spots (5).

2. A method as claimed in claim 1, **characterized in that** the spindle (6) and the piston (4) are injection moulded onto the sleeve-like element (1) in one and the same injection moulding cycle.

3. A method as claimed in claim 2, **characterized in that** the spindle (6) and the piston (4) are injection moulded onto the sleeve-like element (1) via predetermined weak spots (10).

## Revendications

1. Procédé de fabrication d'un dispositif distributeur pour produits à étendre, tels que de la colle, dans lequel un élément (1) en forme de douille, un socle (7) avec un arbre (6), un piston (4) pour loger le produit et un capuchon d'obturation sont fabriqués par moulage par injection et les pièces ainsi fabriquées sont ensuite montées, le piston (4) étant moulé par injection à l'arbre (6) dans un processus d'injection commun, **caractérisé en ce que** le piston (4) est moulé par injection de façon détachable à l'arbre (6) par l'intermédiaire de points, destinés à la rupture (5).

2. Procédé selon la revendication 1, **caractérisé en ce que** l'arbre (6) et le piston (4) sont moulés par injection dans un processus d'injection commun à l'élément (1) en forme de douille.

3. Procédé selon la revendication 2, **caractérisé en ce que** l'arbre (6) et le piston (4) sont moulés par injection à l'élément (1) en forme de douille par l'intermédiaire de points destinés à la rupture (10).
